(19) Europäisches Patentamt
European Patent Office
Office européen des brevets

(11) **EP 3 900 542 A1**

(12) **EUROPEAN PATENT APPLICATION**

(43) Date of publication:
**27.10.2021 Bulletin 2021/43**

(51) Int Cl.:
**A23D 7/005** (2006.01)          **A23D 7/01** (2006.01)
**A23D 7/06** (2006.01)          **A23L 27/60** (2016.01)

(21) Application number: **21157180.7**

(22) Date of filing: **15.02.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.04.2020   US 202016856783**

(71) Applicant: **H.J. Heinz Company Brands LLC**
**Pittsburgh, Pennsylvania 15222 (US)**

(72) Inventors:
- **BRUNEL, Stéphane**
  **6534 AD Nijmegen (NL)**
- **MELGAREJO SANCHEZ, Pablo**
  **6534 AD Nijmegen (NL)**
- **SCHELFHOUT, Vic**
  **6534 AD Nijmegen (NL)**
- **AGUIRRE CARDENAS, Maycirit**
  **6534 AD Nijmegen (NL)**

(74) Representative: **Boult Wade Tennant LLP**
**Salisbury Square House**
**8 Salisbury Square**
**London EC4Y 8AP (GB)**

(54) **SHELF-STABLE SPRAYABLE SALAD DRESSING**

(57)   Shelf-stable dressing compositions that are readily sprayable are provided herein. The shelf-stable dressings are generally comprised of oil, water, a thickening agent, an acidic component, and an emulsifier in amounts effective to provide a stable emulsion with microbial stability. The shelf-stable dressing compositions provided herein are advantageously characterized by a sprayable viscosity that allows the emulsified dressings to be evenly dispersed via a spray nozzle.

**FIG. 1**

EP 3 900 542 A1

**Description**

**FIELD**

The present disclosure relates to shelf-stable salad dressing products, in particular sprayable salad dressing products.

**BACKGROUND**

Dressings for salads are available in a variety of traditional formats. Salad dressings can be in the form of emulsified dressings such as mayonnaise-based dressings (e.g., ranch, Caesar, blue cheese dressings) and oil and vinegar-based dressings (e.g., vinaigrettes). The dressings may be stable for a period of time when stored at room temperature. Other dressings may be stable only at refrigeration temperatures for a period time.

Sprayable dressings are also available. Such dressings allow consumers to better control the amount of product used, which can in some instances be for the purpose of controlling caloric intake. However, dressings can pose challenges in terms of providing both a texture, sprayability, and shelf-life that is acceptable to consumers.

**BRIEF DESCRIPTION OF THE DRAWINGS**

FIG. 1 is a front perspective view of a container for packaging a shelf-stable salad dressing product.

FIG. 2 is a flowchart of an exemplary process for making a shelf-stable salad dressing product.

FIG. 3 is a comparison of spray patterns for shelf-stable salad dressing products prepared according to the recipes in Table 3.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present invention. Also, common but well-understood elements that are useful or necessary in a commercially feasible embodiment are often not depicted in order to facilitate a less obstructed view of these various embodiments of the present invention. Certain actions and/ or steps may be described or depicted in a particular order of occurrence while those skilled in the art will understand that such specificity with respect to sequence is not actually required. The terms and expressions used herein have the ordinary technical meaning as is accorded to such terms and expressions by persons skilled in the technical field as set forth above except where different specific meanings have otherwise been set forth herein.

**DETAILED DESCRIPTION**

The present disclosure relates to shelf-stable dressings that are readily sprayable. In one particular approach, the dressings are emulsified dressings (i.e., oil-in-water emulsions). In one approach, the dressings provided herein are advantageously characterized by a sprayable viscosity that allows the emulsified dressings to be evenly dispersed from a spray nozzle onto a food product. It has generally been thought that the viscosity of a salad dressing product is positively correlated with the physical stability of a product, such as emulsion stability. However, dressing products with high viscosity are not readily sprayable. Further, it is generally thought that increasing the acidity (i.e., lowering the pH) of a dressing product is positively correlated with microbial stability to provide a shelf stable product. However, emulsified dressing products that are too acidic result in an unstable emulsion. The salad dressing emulsions described herein advantageously are both shelf-stable and sprayable.

By shelf stable, it is meant that the dressings can be stored in sealed containers at ambient temperature (i.e., about 20°C) for at least about 6 months, in another aspect at least about 9 months, and in another aspect at least about 12 months. Shelf stable refers to both emulsion stability as well as microbial stability. Emulsion stability refers to the ability of the dressings to be stored for periods of time with the oil dispersed in the aqueous phase without separation or coalescence. Microbial stability refers to the ability of the dressings to be stored for periods of time without the growth of various microorganisms or molds that would render the products visually unappealing and/ or unsafe for human consumption.

The dressings provided herein generally are comprised of oil, a thickening agent, an acidic component, an emulsifier, and water. In one aspect, the continuous phase comprises water and the dispersed phase comprises oil. In some aspects, the dressings provided herein may further comprise salt, herb/ spice, a sweetener, or combinations thereof.

Oil is incorporated into the dressing to produce an emulsified dressing. In one aspect the dressing is an oil-in-water emulsion. Further, oil can impart a desirable the flavor to the dressing and the oil content can also be adjusted to provide the desired nutritional content for the dressing. For example, the amount of may be lowered to reduce the calorie content per spray for a sprayable salad dressing product. The oil content of the dressing may also contribute to the cloudiness of the dressing, with high oil content increasing the opacity of the dressing. By some approaches, the dressings may include oils in an amount ranging from about 1 percent to about 25 percent, in some aspects from about 1 percent to about 20 percent, in some aspects from about 2 percent to about 15 percent, and in some aspects from about 3 percent to about 14 percent, and another aspect about 3.5 to about 13 percent by weight.

As used herein, the term "oil" means oils that are liquid at room temperature (22°C) and at atmospheric pressure (760 mmHg). Exemplary oils for the dressings generally include vegetable oil. If desired, other fat-sources, such as solid fat (i.e., melting point above 22°C), shortening, dairy fat, milk fat, butter, and combinations thereof, may also be included, if desired, so long as the appropriate viscosity for spraying is provided. In some approaches, the oil may be a hydrogenated oil. Suitable vegetable oils include but are not limited to rapeseed, corn, sesame, canola, olive, palm, sunflower seed, safflower, cottonseed, and soybean oil, and combinations thereof.

The aqueous or water phase comprises water and optionally another water-soluble, food grade solvent. In some aspects, the water phase comprises water, salt, a flavor, a colorant, a sweetener, an acidic component, or combinations thereof. The aqueous phase generally is included an amount of about 40 to about 85 percent, in another aspect about 45 to about 80 percent, and in another aspect about 48 to about 77 percent of the total weight of the dressing.

The dressings further include one or more emulsifiers. The emulsifiers allow the oil phase to be blended into the water or aqueous phase ingredients to form an oil-in-water emulsion. The amount of emulsifier contributes to the stability of the emulsion and the viscosity of the dressing product. By some approaches, the dressings may include one or more emulsifiers in an amount ranging from about 0.1 percent to about 3.0 percent, in another aspect about 0.1 to about 2.0 percent, in another aspect about 0.1 to about 1.0 percent, in another aspect about 0.2 percent to about 0.8 percent, and in another aspect about 0.3 to about 0.7 percent by weight.

Exemplary emulsifiers include egg yolk, lecithin, protein (such as whey protein), soy lecithin, agar, albumin, alginate, casein, glycerol monostearate, polysorbate, polyglycerol ester, sugar ester, sorbitan ester, modified starch, and combinations thereof. In one approach, the dressing includes little to no chemical emulsifiers, such as glycerol monostearate, polysorbates, polyglycerol esters, sorbitan esters, and the like. In some approaches, egg yolk may be the only emulsifier present in the dressing. Sources of egg yolk can include, for example, non-salted egg yolk, salted egg yolk, and egg yolk powder. In some embodiments, the egg yolk powder may be a heat-stable egg yolk powder. The heat-stable egg yolk powder can include, for example, pasteurized and spray-dried egg yolk with improved thermal stability. In some embodiments, the egg yolk may be an enzyme modified egg yolk that has been treated with enzymes so as to modify the egg yolk to increase the emulsifying capacity of the egg yolk.

The pH of the dressing may be adjusted to the desired acidity by adding one or more acidic components. The pH of the dressing contributes to the microbial stability (i.e., the ability of the dressings to be stored for periods of time without the growth of various microorganisms or molds) during the shelf life of the dressing product.

In some aspects, the acidic component may be added to aqueous phase ingredient(s). In one approach, the acid acidic component may be added to aqueous phase ingredient(s) prior to the emulsification of the dressing with the oil phase. Adjusting the pH of the aqueous phase ingredients with the acidic component may contribute to the microbiological stability of the dressing. In one approach, the acidic component may provide a pH of the aqueous phase of below about 4.0, in another aspect in a range of about 3.0 to about 4.0, in another aspect in a range of about 3.2 to about 4.0, in another aspect in a range of about 3.3 to about 3.7, and in another aspect in a range of about 3.4 to about 3.6.

Further, one or more acidic components may be added to the final dressing product, after emulsification of the oil and aqueous phases, if needed, to adjust the final pH of the dressing product. Adjusting the final pH of the final emulsified dressing with one or more acidic components may contribute to the emulsion stability, that is, it may help to prevent phase separation over the shelf life of the dressing product. The final dressings products have a pH of below about 4.5, in another aspect below about 4.0, in another aspect in a range of about 3.0 to about 4.5, in another aspect in a range of about 3.2 to about 4.0, in another aspect in a range of about 3.3 to about 3.7, and in another aspect in a range of about 3.4 to about 3.6. Final dressing products in the provided pH ranges contribute to the shelf stability of the dressing product while still ensuring the stability of the emulsion.

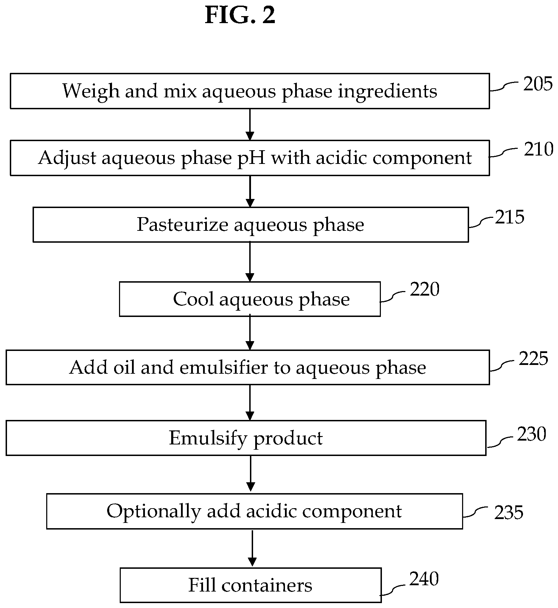

The acidic component may include one or more edible acids (i.e., food grade acids). The acidic component may include, for example, citric acid, sorbic acid, phosphoric acid, lactic acid, acetic acid, and combinations thereof. In some aspects, the acidic component may comprise vinegar. Exemplary vinegars include white vinegar, balsamic vinegar, apple cider vinegar, red wine vinegar, white wine vinegar, malt vinegar, and rice vinegar. In addition to contributing to microbial stability, the acidic components may also impart a desirable flavor to the dressings. As described with reference to FIG. 2, the acidic component may be added to aqueous phase ingredients during the preparation of the dressing as well as to adjust the pH of the final dressing product.

By some approaches, the dressing may include one or more acidic components providing an acidity ranging from about 0.5 percent to about 15.0 percent, in another aspect from about 0.5 percent to about 10.0 percent, in another aspect about 0.5 to about 7 percent, in another aspect from about 0.5 percent to about 4.0 percent, in another aspect from about 1.5 percent to about 3.0 percent, and in another aspect from about 1.7 percent to about 2.7 percent acidity. The acidity of the dressing product is defined as percentage of acid added. For example, acetic acid may be added in the form of vinegar. The "acidity" refers to the amount of acetic acid contributed by the vinegar and not the total amount of vinegar (which may include sugars and other ingredients) added to the product.

In one approach, a sufficient amount of acidic component may be employed in the preparation of the dressing to achieve a final dressing product having a pH of below about 4.5, in another aspect below about 4.0, in another aspect in a range of about 3.0 to about 4.5, in another aspect in a range of about 3.2 to about 4.0, in another aspect in a range of about 3.3 to about 3.7, and in another aspect in a range of about 3.4 to about 3.6.

One or more buffers may also be included, if desired. Suitable buffers include a food grade salt of an acid, such as sodium, calcium or potassium salts of citrate, malate, succinate, acetate, adipate, tartrate, fumarate, phosphate, lactate, or carbonate, and combinations thereof. For example, sodium acetate, sodium citrate, potassium citrate, sodium lactate, potassium tartrate, disodium phosphate, and any combination thereof are suitable. Buffers may be included in an amount of 0 to about 1.0, in another aspect about 0.01 to about 0.25 percent, and in another aspect about 0.1 to about 0.25 percent by weight of the dressing.

The dressings also have a viscosity of about 100 cps to about 7000 cps, in another aspect of about 500 cps to about 6000 cps, in another aspect of about 1000 cps to about 5000 cps, and in another aspect about 1300 cps to about 4500 cps. Viscosity can be measured using a Brookfield viscometer, such as a Brookfield LV viscometer, as measured using Spindle 62 at 12 rpm at 20-25°C. The viscosity of the dressing can impact the sprayability of the dressing product. For example, the dressing viscosity can impact how the spray stream is dispensed via a spray nozzle. Viscosity in the described ranges has been found to be effective to deliver an even mist of when the dressing is dispensed via a spray nozzle to provide even coverage of the food to which the dressing is applied. At least in some approaches, the dressings described herein exhibit non-Newtonian flow with shear thinning properties.

By some approaches, the dressing product may have a density of about 0.01 g/100 cc to about 500 g/100 cc, in some aspects of about 1 g/ 100 cc to about 300 g/ 100 cc, in some aspects of about 50 g/100 cc to about 200 g/100 cc, and in some aspects about 100 g/100 cc to about 150 g/100 cc.

The viscosity of the dressings can be adjusted by one or more thickening agents. Suitable thickening agents include starches, cellulose derivatives, polysaccharides, gums, gum derivatives, sweeteners, polyols, and combinations thereof. Exemplary gums include, for instance, xanthan gum, guar gum, gum arabic, tragacanth, gum karaya, gum ghatti, locust bean gum, quince seed gum, and tamarind gum. Starches derived from arrowroot, corn, potato, rice, sago, tapioca, waxy corn and wheat can also be used to build up viscosity. Exemplary gum derivatives include, for instance, propylene glycol alginate and low-methoxyl pectin. Exemplary cellulose derivatives include, for instance, carboxymethyl cellulose, hydroxypropyl methylcellulose, and microcrystalline cellulose. Exemplary polysaccharides include, for instance, dextran, carrageenan, furcellaran, arabinogalactan, alginate, pectin, and agar. By some approaches, the dressing may include one or more thickening agents in an amount ranging from about 0.01 percent to about 7.0 percent, in another aspect from about 0.01 to about 5.0 percent, in another aspect from about 0.01 percent to about 3.0 percent, in another aspect from about 0.05 percent to about 1.0 percent, in another aspect about 0.1 to about 0.5 percent, in another aspect about 0.1 percent to about 0.3 percent, or in another aspect from about 0.2 percent to about 0.3 percent by weight.

Viscosity may also be increased by adding nutritive sweeteners such as, for example, honey, sucrose, fructose, glucose, tagatose, trehalose, galactose, rhamnose, cyclodextrin (e.g., $\alpha$-cyclodextrin, $\beta$-cyclodextrin, and $\gamma$-cyclodextrin), maltodextrin (e.g., resistant maltodextrins such as Fibersol-2™), dextran, ribulose, threose, arabinose, xylose, lyxose, allose, altrose, mannose, idose, lactose, maltose, invert sugar, isotrehalose, neotrehalose, palatinose or isomaltulose, erythrose, deoxyribose, gulose, idose, talose, erythrulose, xylulose, psicose, turanose, cellobiose, amylopectin, glucosamine, mannosamine, fucose, glucuronic acid, gluconic acid, glucono-lactone, abequose, galactosamine, beet oligosaccharides, isomalto-oligosaccharides (e.g., isomaltose, isomaltotriose, panose and the like), xylo-oligosaccharides (e.g., xylotriose, xylobiose and the like), gentio-oligoscaccharides (e.g., gentiobiose, gentiotriose, gentiotetraose and the like), sorbose, nigero-oligosaccharides, palatinose oligosaccharides, fucose, fractooligosaccharides (e.g., kestose, nystose and the like), maltotetraol, maltotriol, malto-oligosaccharides (e.g., maltotriose, maltotetraose, maltopentaose, maltohexaose, maltoheptaose and the like), lactulose, melibiose, raffinose, rhamnose, ribose, isomerized liquid sugars such as high fructose corn or starch syrups (e.g., HFCS55, HFCS42, or HFCS90), coupling sugars, soybean oligosaccharides, glucose syrup, or combinations thereof.

Sweeteners included in the dressings may include high intensity sweeteners or nutritive sweeteners, or a combination thereof, including, for example, sucralose, aspartame, saccharine, monatin, peptide-based high intensity sweeteners (e.g., Neotame®), cyclamates (such as sodium cyclamate), Luo Han Guo, acesulfame potassium, alitame, saccharin, neohesperidin dihydrochalcone, cyclamate, N-[N-[3-(3-hydroxy-4-methoxyphenyl)propyl]-L-a-aspartyl]-L-10 phenylalanine 1-methyl ester, N-[N-[3-(3-hydroxy-4-methoxyphenyl)-3-methylbutyl]-L-aaspartyl]-L-phenylalanine 1-methyl ester, N-[N-[3-(3-methoxy-4-hydroxyphenyl)propyl]L-a-aspartyl]-L-phenylalanine 1-methyl ester, salts thereof, stevia, steviol glycosides, such as rebaudioside A (often referred to as "Reb A"), rebaudioside B, rebaudioside C, rebaudioside D, rebaudioside E, rebaudioside F, dulcoside A, dulcoside B, rubusoside, stevioside, and steviolbioside, and combinations thereof. The selection of sweetener and amount of sweetener added may depend, at least in part, on the desired viscosity of the dressing and whether the sweetener is included as a thickening agent. For example, nutritive sweeteners like sucrose may be included in much higher amounts than high intensity sweeteners like neotame to provide the same level of sweetness and such higher total solids content contributed by the sweetener increases the viscosity of the composition.

Viscosity may also be increased through the use of one or more polyols such as, for example, erythritol, maltitol, mannitol, sorbitol, lactitol, xylitol, inositol, isomalt, propylene glycol, glycerol (glycerine), 1,3-propanediol, threitol, galactitol, palatinose, reduced isomalto-oligosaccharides, reduced xylo-oligosaccharides, reduced gentio-oligosaccharides, reduced maltose syrup, reduced glucose syrup, or combinations thereof.

In some approaches, the type and amount of sweetener may be selected to achieve a dressing product having a particular Brix value. The Brix value is indicative of the sugar content of an aqueous solution and is defined as the number of grams of sucrose present per 100 grams of liquid. The Brix value can be determined using a refractometer to measure the refraction of light passing through a liquid sample, the refraction of light (i.e., refractive index) corresponding to a Brix value. In one aspect, the dressings may have a Brix value of about 10 to about 20, in another aspect of about 11 to about 19, in another aspect of about 12 to about 18, and in another aspect of about 12.5 to about 17.5.

One or more flavors may also be employed in the dressings to augment and/ or alter the flavor thereof. Flavors may include a wide variety of herbs, spices, and natural or artificial flavors. Exemplary herbs and spices for the dressings may include pepper, garlic powder, chili powder, onion powder, parsley, oregano, basil, chives, mustard, coriander, curry, cloves, rosemary, chervil, anise, cilantro, horseradish, fennel, allspice, nutmeg, paprika, thyme, tarragon, turmeric, dill, sage, saffron, marjoram, mint, cayenne pepper, chipotle, cinnamon, ginger, wasabi, capsicum, or the like. Exemplary flavors for the dressings may include natural onion flavors, natural ranch flavor, natural garlic flavor, lemon juice, lemon juice flavor, lime juice, lime juice flavor, soy sauce, malt barley extract, vegetable flavors, fruit flavors, beta carotene, and the like. Flavors may be incorporated, for example, as oils, liquids, powders, juices, granules, purees, pastes, and the like. In some aspects, flavors may be oil based or water based. The amount of flavor added to the dressings may depend on the intensity of the flavor desired. In some aspects, the dressings may include one or more flavors in an amount ranging from about 0 percent to about 20 percent, in some aspects from about 0.01 percent to about 15 percent, and in some aspects from about 0.01 percent to about 7 percent by weight of the dressing.

The dressing may further include salt (e.g., sodium chloride) in an amount ranging from about 0 percent to about 5 percent, in some aspects about 0.5 to about 2.0 percent, in some aspects about 0.5 percent to about 1.5 percent, and in some aspects about 0.8 to about 1.2 percent by weight. The amount of salt may contribute to the flavor of the final dressing product.

In one particular approach, a shelf-stable salad dressing product is provided in the form of an oil-in-water emulsion. The dressing product comprises: about 40 percent to about 85 percent aqueous phase by weight of the dressing product; about 1 percent to about 25 percent oil by weight of the dressing product, the oil dispersed in the aqueous phase; about 0.01 percent to about 7.0 percent thickening agent by weight of the dressing product; an emulsifier; and an acidic component in an amount effective to provide the salad dressing product with a pH below about 4.5, such as in the range of about 3.0 to about 4.5. In one aspect, the acidic component may include vinegar. In some aspects, the salad dressing product may include about 0.01 percent to about 3.0 percent by weight thickening agent. In one aspect, the emulsifier comprises egg yolk powder and is included in an amount of about 0.1 percent to about 1 percent by weight of the dressing product. In one approach, the emulsifier comprises heat-stable egg yolk powder. In some aspects, the dressing product may further comprise about 0.5 percent to about 1.5 percent salt by weight of the dressing product. In some aspects, the dressing product may further comprise at least one sweetener, which in some approaches may comprise steviol glycoside. In one particular aspect, the salad dressing product has a Brix value ranging from about 12 to about 18. In some approaches, the oil comprises at least one of rapeseed, corn, sesame, canola, olive, palm, sunflower seed, safflower, cottonseed, and soybean oil, and combinations thereof. In some approaches, the shelf-stable salad dressing product has a viscosity ranging from about 1000 cps to about 5000 cps.

In some aspects, the dressings have a sprayable viscosity that allows the dressings to be dispensed as a mist via a spray nozzle. By some approaches, the sprayability of the dressings may be assessed using a 5-point spray score, with a spray score of 3 being preferred. A spray score of 1 indicates that the dressing is too thin, resulting in too wide a dispersion of the spray stream. Conversely, a spray score of 5 indicates the dressing is too thick, resulting in concentrated jet-like spray stream. The spray score is indicative of spread and droplet size of the spray stream. Several factors may impact the spray score of the dressing, the distance of the spray nozzle from the substrate to which the dressing is applied, the angle of the spray nozzle, and the speed and force with which the spray pump is actuated. By some approaches, the dressings may have a spray score between about 2 and about 4 and, in some aspects, between about 2.5 and about 3.5.

The following methodology is employed to measure a spray score for dressing products:

1. Collect dressing samples in a bottle with a spray nozzle.

2. Prime the bottle to fill the spray nozzle and the tube leading to the spray nozzle with product.

3. Weigh the bottle and spray 10 times, weighing after each spray, to determine dosage per spray.

4. Position the bottle at an angle of 45 degrees relative to a horizontal surface and with the spray nozzle at a distance of 15 cm from the horizontal surface.

5. Add grid paper to the horizontal surface below the spray nozzle to capture the spray pattern.

6. Actuate the spray nozzle.

7. Draw a circle around the spray pattern on the grid paper to define the dispersion of the spray.

8. Capture a picture or image of the spray pattern.

9. Evaluate the dressing on the following parameters: quantity of droplets, size of droplets, shape of spray, distribution of droplets.

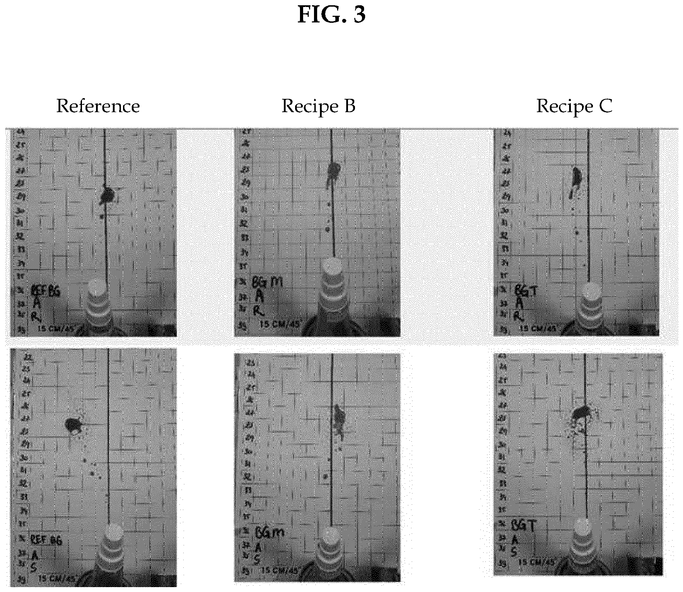

When evaluating the spray performance of different dressings, the same bottle format and sprayer is utilized to compare sprayability of different dressing products. Example images of spray patterns on grid paper captured using the above methodology are provided in FIG. 3. To determine a spray score, spray patterns were compared to a reference spray pattern and graded based on a comparison with the reference.

Packaging

The shelf-stable salad dressing products described herein may be provided in a variety of types of packages, such as glass or plastic containers. With respect to plastic containers, the plastic containers may be made from, for example, high density polyethylene (HDPE) or polyethylene terephthalate (PET). By some approaches, the shelf-stable salad dressing may be packaged in a transparent container, such as for example a transparent PET container.

In some approaches, the shelf-stable dressings described herein may be packaged in containers including a spray nozzle for dispensing the dressing. In some aspects, the spray nozzle may be a spray nozzle that dispenses a mist and in other aspects may be a spray nozzle that dispenses a fine mist. By some approaches, the spray nozzle may be selected based on the volume of dressing dispensed when a user actuates the spray nozzle to dispense the dressing in the form of a spray. A spray nozzle that dispenses too little dressing may cause the user to actuate the nozzle too often, while a spray nozzle that dispenses too much may over-saturate the food to which the dressing is applied. By some approaches, the spray nozzle may dispense an amount of dressing ranging from about 0.1 mL to about 1 mL per actuation of the nozzle, in some aspects about 0.4 mL to about 0.8 mL per actuation of the nozzle, and in other aspects about 0.5 mL to about 0.7 mL per actuation of the nozzle.

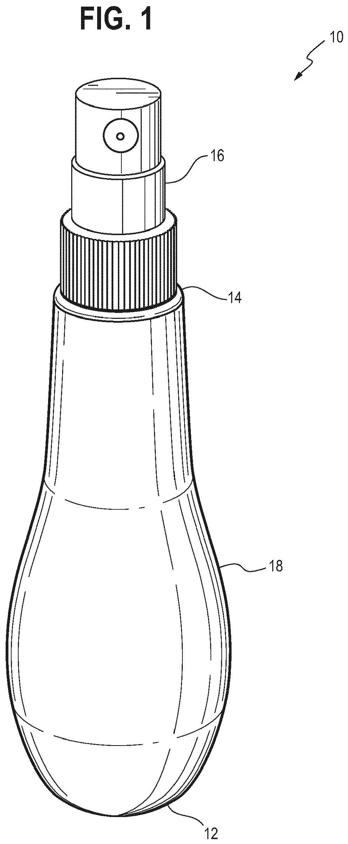

Referring now to FIG. 1, an exemplary form of the container is shown with at least some of the above properties. FIG. 1 is an exemplary embodiment of a container 10 that may be used to package and dispense the salad dressings described herein. The container 10 includes a closed first end 12 and an at least partially open second end 14 configured to be securable to a closure 16. The first and second ends 12, 14 are connected by a generally tubular sidewall 18, which can take any suitable cross section, including any polygonal shape, any curvilinear shape, or any combination thereof, to form an interior. In some forms, the diameter of the interior may vary along the length of the sidewall. In the example shown in FIG. 2, the shape of the sidewall is generally circular and tapers as the sidewall transitions from a wider first end 12 to form a narrow first end 14. Preferably, the container 10 is sized to include a plurality of serving sizes of the salad dressings therein. In one example, the container 10 is sized to hold about 200 mL of salad dressing.

In FIG. 1, the illustrated container 10 includes a first end 12, which acts as a secure base for the container 10 to rest upon. The sidewall 18 extends generally upward from the base to the second end 14. As shown in FIG. 1, the sidewall 18 may be generally drop-shaped, curving generally outwardly and having a larger diameter near the base. As discussed above, the closure 16 is secured to the second end 14 by any suitable mechanism, including, for example, a threaded neck, a snap-fit neck, adhesive, ultrasonic welding, or the like. As shown in FIG. 2, the closure 16 may be a spray nozzle that dispenses the salad dressing as a fine mist. The spray nozzle may be of the types described above.

In one particular approach, a packaged shelf-stable salad dressing product is provided. The product comprises a container body having an interior defined by a sidewall extending between a closed first end and an at least partially open second end to define an exit path; the shelf-stable salad dressing disposed in the interior of the container body; and a nozzle disposed in the exit path having a plurality of openings therein, the nozzle configured to dispense the salad dressing product through the plurality of openings a total amount of the dressing ranging from about 0.1 mL to about 1 mL per actuation of the nozzle. In one particular aspect, the nozzle is configured to dispense a total amount of the dressing of about 0.4 mL to about 0.8 mL per actuation of the nozzle.

Method of Making

In one approach, the shelf-stable dressings provided herein may be produced by the following steps: combining aqueous phase ingredients; treating the aqueous phase ingredients at a temperature effective to pasteurize the aqueous phase ingredients; adding oil to the pasteurized aqueous phase to provide a water-oil mixture; and emulsifying the water-oil mixture to provide the emulsified salad dressing product.

FIG. 2 provides a flow chart illustrating an exemplary process for making the shelf-stable dressings in accordance with some embodiments. By some approaches, the dressings may be prepared by mixing the ingredients with any of a wide variety of standard mixing equipment, such as in a blender or mixing tank.

To form the dressing, the aqueous phase ingredients are weighed and pre-mixed 205. Aqueous phase ingredients generally include all ingredients except oils and emulsifiers. For example, in some aspects, the aqueous phase ingredients include water, thickening agent, flavor, and sweetener. Aqueous phase ingredients may include a combination of powders and liquids.

One or more acidic components are then added to the aqueous phase ingredients to adjust the pH of the aqueous phase 210. By some approaches, the acidic component may be added to adjust the aqueous phase to a pH of less than about 4.0, and in some aspects to a pH of less than about 3.8.

After adjusting the pH of the aqueous phase, the aqueous phase is thermally treated at a temperature and for a time effective to pasteurize the aqueous phase 215. Pasteurization of the aqueous phase also contributes to the microbial stability of the final dressing product. In some approaches, the pasteurization time and temperature may be determined according to the Integrated Pest Management (IPM) standard for food products having a pH less than 4.0. In some approaches, pasteurization is carried out by heating the aqueous phase to a temperature of about 85°C to about 90°C, in some aspects to a temperature of about 87°C, for about 5 to about 10 minutes. Following pasteurization, the aqueous phase is cooled 220 to a temperature below about 20°C. Generally, it has been found that temperature differences between the aqueous phase and oil phase impacts the flow properties of the two phases and results in an unstable emulsion. Accordingly, a water phase at high temperature may contribute to emulsion instability.

Oil and emulsifier are then added to the aqueous phase 225. The oil and emulsifier ingredients may first be weighed and mixed prior to addition to the aqueous phase. In another approach, the oil and emulsifier ingredient may be separately added to the aqueous phase.

The dressing product is then emulsified 230 using suitable emulsifying equipment, such as a blender, mixer, colloid mill, high shear mixer, high pressure homogenizer, or the like. The resulting dressing product is an oil-in-water emulsion having a sprayable viscosity.

After emulsification, one or more acidic components may be added as needed for a final pH adjustment of the dressing product. After adding one or more acidic components, the dressing product is mixed. By some approaches, the pH of the final dressing product may be adjusted to the range of about 2.5 to about 4.5, in another aspect about 3.0 to about 4.0, and in another aspect about 3.4 to about 3.6. Generally, it has been found that a pH higher than the described ranges will result in reduced microbial stability and that a pH lower than the described ranges will result in an unstable emulsion. While not wishing to be bound by theory, the pH of the dressing product is believed to play a role in the coalescence forces stabilizing the emulsion. In general, if the pH of the dressing product is at or below about 3.0, the emulsion is likely to be unstable.

The final emulsified, shelf-stable dressing product resulting from the above process may be packaged in containers. Any one of a wide variety of fillers may be used to fill containers. In some aspects, the final dressing product may be cold filled during packaging without adversely affecting the shelf life of the product.

In one particular approach, a method of preparing a shelf-stable salad dressing product is provided. The method comprises combining aqueous phase ingredients; adding an acidic component in an amount effective to the aqueous phase ingredients to provide an aqueous mixture having a pH of less than about 4.0; treating the aqueous mixture at a temperature effective to pasteurize the aqueous phase mixture; adding oil to the pasteurized aqueous mixture to provide a water-oil mixture; and emulsifying the water-oil mixture to provide the emulsified salad dressing product. n one aspect, the method further comprises adding an acidic component after the emulsifying step to provide the emulsified salad dressing product with a final pH of about 3.2 to about 4.0. In another aspect, the aqueous phase ingredients comprise water, salt, and thickening agent. In one aspect, the acidic component comprises at least one of citric acid, sorbic acid, phosphoric acid, lactic acid, acetic acid, and combinations thereof, and in one particular aspect, the acetic acid is in the form of vinegar.

Examples

The following examples are intended to illustrate the shelf-stable, salad dressing products and methods provided herein and not to limit or otherwise restrict the disclosure. Unless indicated otherwise, all parts, ratios, and all percentages are based on weight.

Example 1.

Dressing samples were prepared in which amounts of oil, flavor, salt, xanthan gum, acetic acid, and sugar were varied. Sixteen samples were prepared according to the formulations of Table 1 with the balance of the formulations including water and, for samples including oil, an emulsifier (e.g., heat stable egg yolk) in an amount comprising about 0.5 percent by weight of dressing:

Table 1

| Sample | Oil (%) | Flavor (%) | Salt (%) | Xanthan Gum (%) | Acetic Acid (%) | Sugar (%) |
|--------|---------|------------|----------|-----------------|-----------------|-----------|
| 1 | 20 | 25 | 1 | 0.4 | 1.5 | 6.7 |
| 2 | 20 | 0 | 2 | 0.2 | 2 | 16 |
| 3 | 0 | 0 | 2 | 0.4 | 2 | 16 |
| 4 | 0 | 0 | 1 | 0.4 | 1.5 | 6.7 |
| 5 | 0 | 0 | 2 | 0.2 | 1.5 | 6.7 |
| 6 | 0 | 25 | 2 | 0.4 | 1.5 | 6.7 |
| 7 | 0 | 25 | 1 | 0.2 | 1.5 | 6.7 |
| 8 | 20 | 25 | 1 | 0.2 | 2 | 16 |
| 9 | 20 | 0 | 1 | 0.2 | 1.5 | 6.7 |
| 10 | 0 | 0 | 1 | 0.2 | 2 | 16 |
| 11 | 0 | 25 | 2 | 0.2 | 2 | 16 |
| 12 | 20 | 25 | 2 | 0.4 | 2 | 16 |
| 13 | 20 | 0 | 1 | 0.4 | 2 | 16 |
| 14 | 20 | 25 | 2 | 0.2 | 1.5 | 6.7 |
| 15 | 0 | 25 | 1 | 0.4 | 2 | 16 |
| 16 | 20 | 0 | 2 | 0.4 | 1.5 | 6.7 |

*Acetic acid was measured in acidity rather than weight percent (i.e., for acetic acid added in the form of vinegar, the percentage listed includes the amount of acetic acid contributed by the vinegar and not the amount of vinegar added).

The samples in Table 1 had a final pH of about 3.5. The samples in Table 1 were evaluated to determine the impact of the oil, flavor, salt, xanthan gum, acetic acid, and sugar content on various dressing characteristics. Characteristics of samples 1-16 are provided in Table 2.

Table 2

| Sample | CIMSCEE Score | Viscosity (cps) | Density (g/100 cc) | Amount Sprayed (g) | Spray Score | Stability at 3°C (Days) | Stability at 20°C (Days) | Stability at 37°C (Days) | Stability at 55°C (Days) |
|---|---|---|---|---|---|---|---|---|---|
| 1 | 40.53 | 2915 | 102.01 | 0.76 | 1 | 100 | 100 | 100 | 59 |
| 2 | 61.97 | 1491 | 107.45 | 0.85 | 1 | 59 | 38 | 21 | 12 |
| 3 | 46.24 | 1780.5 | 108.81 | 0.52 | 1 | 3 | 3 | 3 | 3 |
| 4 | 30.25 | 1638.5 | 104.4 | 0.79 | 1 | 5 | 5 | 3 | 3 |
| 5 | 33.52 | 486.1 | 104.54 | 0.86 | 2 | 28 | 5 | 5 | 3 |
| 6 | 33.72 | 1630 | 104.82 | 0.79 | 1 | 100 | 38 | 31 | 19 |
| 7 | 30.44 | 479.9 | 103.82 | 0.85 | 3 | 3 | 3 | 3 | 3 |
| 8 | 58.06 | 1411 | 106.87 | 0.79 | 1 | 3 | 3 | 3 | 3 |
| 9 | 39.81 | 1025 | 102.5 | 0.73 | 3 | 100 | 100 | 100 | 45 |
| 10 | 42.97 | 548.65 | 108.5 | 0.69 | 2 | 38 | 38 | 10 | 7 |
| 11 | 46.62 | 613.65 | 109.13 | 0.59 | 2 | 100 | 100 | 100 | 21 |
| 12 | 63.26 | 5079 | 104.69 | 0.82 | 1 | 100 | 38 | 17 | 10 |
| 13 | 57.80 | 3509.5 | 105.72 | 0.8 | 1 | 14 | 10 | 10 | 3 |
| 14 | 44.35 | 1179.5 | 103.34 | 0.79 | 3 | 100 | 100 | 100 | 70 |
| 15 | 43.48 | 1800 | 108.41 | 0.86 | 1 | 100 | 100 | 100 | 45 |
| 16 | 43.87 | 2660 | 102.06 | 0.78 | 1 | 100 | 100 | 100 | 52 |

As shown in Table 2, a CIMSCEE safety value was calculated for each sample to assess the microbial stability of each dressing. A spray score was also measured for each sample according the spray score methodology described above to assess the sprayability of each dressing sample.

In some approaches, the shelf stability of the salad dressing products may also be characterized by the Comité des Industries des Mayonnaises et Sauces Condimentaires de la Communauté Économique Européenne's (CIMSCEE) safety value. The microbiological safety and stability of acidic sauces and dressings are conferred by the combination of low pH (e.g., the inclusion of acid), salt (e.g., NaCl), and sugars. The CIMSCEE safety value provides a measure to assess whether a product preserved using acetic acid is microbiologically safe. CIMSCEE defines a microbiologically safe product as one in which a 3-$\log_{10}$ reduction in the number of viable *Escherichia coli* cells occurs in less than 72 hours, which is generally reflected in a CIMSCEE safety value of greater than 63.

The CIMSCEE safety value is calculated using a linear regression equation combining weighted contributions of pH and aqueous-phase concentrations of acetic acid, NaCl, and sugars. The CIMSCEE safety value is defined as:

$$15.75 \, (1 - \alpha) \, (\text{total \% acetic acid}) + 3.08 \, (\% \text{ NaCl}) + (\% \text{ hexose}) +$$

$$0.5 \, (\% \text{ disaccharide}) + 40 \, (4.0 - \text{pH})$$

where (1 - $\alpha$) is the proportion of the total acetic acid that is in the undissociated form, using a p$K_a$ for acetic acid is 4.76 at 25°C and the pH of the aqueous phase. (1 - $\alpha$) can be calculated using the Henderson-Hasselbalch equation:

$$(1 - \alpha) = 1 / (10^{\text{pH-pKa}} + 1)$$

where p$K_a$ is the negative logarithm of the ionization constant (K) of an acid.

In some approaches, shelf stability is also characterized by the calculated CIMSCEE safety value of the final dressing product. A shelf stable dressing may be characterized as having a CIMSCEE safety value in the range of about 30 to about 40, in another aspect about 32 to about 38.

In addition, the viscosity of each sample was measured. Viscosity was measured using a Brookfield LV viscometer using Spindle 62 at 12 rpm at 20-25°C

Each sample was also subjected to stability testing. Stability testing was conducted by storing the samples at various temperatures and recording the number of days for which the emulsion could be stored at each temperature without breaking. In Table 2, the columns labeled 3°C, 20°C, 37°C, and 55°C provide the number of days at each respective temperature for which the sample exhibited no emulsion breaking.

The data in Tables 1 and 2 was analyzed using factorial regression to assess factors that impact the spray score of the dressing product. A factorial regression was performed for spray score versus oil, flavor, salt, xanthan gum, acetic acid, and sugar content. It was found that the xanthan gum, acetic acid, and sugar content has a significant impact on the spray score. The xanthan gum content was found to have a negative effect on the spray score of the dressing product, that is, the higher the xanthan gum content, the higher the spray score value (i.e., closer to 5).

In addition, the data in Tables 1 and 2 was analyzed using factorial regression to assess factors that impact the CIMSCEE score of the dressing product. A factorial regression was performed for CIMSCEE score versus oil, flavor, salt, xanthan gum, acetic acid, and sugar content. It was found that the oil, salt, acetic acid, and sugar content has a significant impact on the CIMSCEE score of the dressing. The oil and salt content were found to have a positive effect on the spray score of the dressing product, that is, the higher the oil content the higher the CIMSCEE score and the higher the salt content the higher the CIMSCEE score.

Example 2.

Dressings were prepared according the formulations in Table 3 and according to the general process described in FIG. 2. Each dressing had a final pH of about 3.5. In Table 3, Dressing A, Dressing B, and Dressing C include flavors and were compared to a reference with no flavor.

Table 3

|  | Reference Dressing | Dressing A | Dressing B | Dressing C |
|---|---|---|---|---|
| Oil (%) | 5 | 0 | 14.57 | 4.65 |
| Flavor (%) | 0 | 25 | 25 | 25 |

(continued)

|  | Reference Dressing | Dressing A | Dressing B | Dressing C |
|---|---|---|---|---|
| Salt (%) | 1.5 | 1 | 1 | 1 |
| Xanthan Gum (%) | 0.2 | 0.2 | 0.28 | 0.2 |
| Acetic Acid* (%) | 1.5 | 1.5 | 1.52 | 1.7 |
| Sugar (%) | 9.8 | 6.7 | 7 | 9.38 |
|  |  |  |  |  |
| Density (g/100 cc) | 104.37 | 104.65 | 102.93 | 105.74 |
| Spray Amount (g) | 0.84 | 0.85 | 0.76 | 0.89 |
| Viscosity (cps) | 820 | 479 | 1485.45 | 542 |
| CIMSCEE | 34.5 | 30.4 | 38.28 | 38.2 |
| Spray Score | 2.5 | 3 | 2.08 | 2.45 |
| *Acetic Acid was measured in acidity rather than weight percent (i.e., for acetic acid added in the form of vinegar, the percentage listed includes the amount of acetic acid contributed by the vinegar and not the amount of vinegar added). | | | | |

The sprayability of the samples prepared according to the formulas in Table 3 was evaluated. A spray score was measured for each sample in Table 3 according to the spray score methodology described above. Images of the spray pattern for the Reference, Dressing B, and Dressing C samples are provided in FIG. 3.

Dressing samples prepared according to the formulations in Table 3 were subjected to testing by a team of 4 to 6 food scientists to assess various sensory attributes. Comparative Dressing A was the most visually clear. Based on testing, opacity of the dressing was found to be positively correlated with the amount of oil. Dressing B had a desirable mouthfeel, which was found to be positively correlated with the amount of oil and xanthan gum in the sample. Dressing C had a desirable taste intensity of the final dressing product, which was found to be positively correlated with the amount of acetic acid and sugar in the sample.

Example 3.

Additional sprayable, shelf-stable salad dressing formulations for four different flavors were developed. These formulations are provided below in Table 4 and were prepared according to the general process described in FIG. 2.

Table 4

|  | Dressing "D" | Dressing "E" | Dressing "F" | Dressing "G" |
|---|---|---|---|---|
| Rapeseed Oil (%) | 3.9 | 12.7 | 14.0 | 4.7 |
| Flavor (%) | 2.5 | 4.2 | 5.0 | 4.8 |
| Salt (%) | 1.0 | 1.0 | 0.9 | 1.0 |
| Heat Stable Egg Yolk (%) | 0.5 | 0.5 | 0.5 | 0.5 |
| Xanthan Gum (%) | 0.27 | 0.27 | 0.28 | 0.20 |
| Vinegar (%) | 28.3 | 21.5 | 15.2 | 17.0 |
| Sweetener (%) | 0.7 | 3.2 | 6.6 | 8.1 |
| Water (%) | 62.7 | 56.2 | 57.1 | 63.2 |
| Sodium Acetate (%) | 0.2 | 0.2 | 0.4 | 0.5 |
| Water Phase Properties | | | | |
| pH | 3.74 ± 0.2 | 3.63 ± 0.2 | 3.69 ± 0.2 | 3.74 ± 0.2 |
| Acidity (% acetic acid)* | 0.98 ± 0.2 | 1.38 ± 0.2 | 1.59 ± 0.2 | 1.48 ± 0.2 |
| Salt (%NaCl) | 1.32 ± 0.2 | 1.44 ± 0.2 | 1.73 ± 0.2 | 1.32 ± 0.2 |

(continued)

| Water Phase Properties | | | | |
|---|---|---|---|---|
| Brix | 12.6 ± 1.0 | 14.5 ± 1.0 | 12.4 ± 1.0 | 14.9 ± 1.0 |
| Final Product Properties | | | | |
| pH | 3.54 ± 0.2 | 3.44 ± 0.2 | 3.50 ± 0.2 | 3.48 ± 0.2 |
| Acidity (% acetic acid)* | 1.61 ± 0.2 | 1.84 ± 0.2 | 2.30 ± 0.2 | 2.55 ± 0.2 |
| Salt (%NaCl) | 1.12 ± 0.2 | 1.14 ± 0.2 | 1.17 ± 0.2 | 1.24 ± 0.2 |
| Density (g/ $cm^3$) | 1.042 ± 0.025 | 1.033 ± 0.025 | 1.010 ± 0.025 | 1.045 ± 0.025 |
| Viscosity (cP) | 170 ± 10 | 210 ± 10 | 265 ± 10 | 110 ± 10 |
| *Acetic Acid was measured in acidity rather than weight percent (i.e., for acetic acid added in the form of vinegar, the percentage listed includes the amount of acetic acid contributed by the vinegar and not the amount of vinegar added). | | | | |

The viscosities in Table 4 were measured using a Brookfield viscometer using Spindle 62 at 100 rpm at 20-25°C. The four formulations in Table 4 were found to be suitable for use with a spray dispenser. The four formulations also had a shelf life of at least about six months.

All percentages and ratios are calculated by weight unless otherwise indicated. All percentages and ratios are calculated based on the total weight of the composition unless otherwise indicated.

Reference throughout the specification to "an example," "one example," "another example," "some examples," "other examples," and so forth, means that a particular element (e.g., feature, structure, and/ or characteristic) described in connection with the example is included in at least one example described herein, and may or may not be present in other examples. In addition, it is to be understood that the described elements for any example may be combined in any suitable manner in the various examples unless the context clearly dictates otherwise.

In describing and claiming the examples disclosed herein, the singular forms "a", "an", and "the" include plural referents unless the context clearly dictates otherwise.

While several examples have been described in detail, it is to be understood that the disclosed examples may be modified. Therefore, the foregoing description is to be considered non-limiting. The foregoing descriptions are not intended to represent the only forms of the dressing products in regard to the details of formulation. Changes in form and in proportion of parts, as well as the substitution of equivalents, are contemplated as circumstances may suggest or render expedient. Similarly, while dressing products and methods have been described herein in conjunction with specific embodiments, many alternatives, modifications, and variations will be apparent to those skilled in the art in light of the foregoing description.

**Claims**

1. A shelf-stable salad dressing product in the form of an oil-in-water emulsion, the dressing product comprising:

   about 40 percent to about 85 percent aqueous phase by weight of the dressing product;
   about 1 percent to about 25 percent oil by weight of the dressing product, the oil dispersed in the aqueous phase;
   about 0.01 percent to about 7.0 percent thickening agent by weight of the dressing product;
   about 0.1 percent to about 3 percent emulsifier by weight of the dressing product; and
   an acidic component in an amount effective to provide the salad dressing product with a pH below about 4.5.

2. The shelf-stable salad dressing product of claim 1, wherein the emulsifier comprises egg yolk powder, preferably wherein the egg yolk powder comprises a heat-stable egg yolk powder.

3. The shelf-stable salad dressing product of claim 1 or claim 2, further comprising about 0.5 percent to about 1.5 percent salt by weight of the dressing product.

4. The shelf-stable salad dressing product of any preceding claim, wherein the oil comprises at least one of rapeseed, corn, sesame, canola, olive, palm, sunflower seed, safflower, cottonseed, and soybean oil, and combinations thereof.

5. The shelf-stable salad dressing product of any preceding claim, further comprising at least one sweetener, preferably wherein the at least one sweetener comprises steviol glycoside.

6. The shelf-stable salad dressing product of any preceding claim, wherein the shelf-stable salad dressing product has a viscosity ranging from about 1000 cps to about 5000 cps.

7. The shelf-stable salad dressing product of any preceding claim, wherein the shelf-stable salad dressing product has a pH ranging from about 3.0 to about 4.5, and/or wherein the acidic component comprises vinegar.

8. The shelf-stable salad dressing product of any preceding claim, comprising about 0.01 percent to about 3.0 percent by weight thickening agent.

9. The shelf-stable salad dressing product of any preceding claim, wherein the shelf-stable salad dressing product has a Brix value ranging from about 12 to about 18.

10. A packaged shelf-stable salad dressing product, the product comprising:

a container body having an interior defined by a sidewall extending between a closed first end and an at least partially open second end to define an exit path;
the shelf-stable salad dressing according to any of claims 1 to 9 disposed in the interior of the container body; and
a nozzle disposed in the exit path having a plurality of openings therein, the nozzle configured to dispense the salad dressing product through the plurality of openings a total amount of the dressing ranging from about 0.1 mL to about 1 mL per actuation of the nozzle.

11. The packaged shelf-stable salad dressing product according to claim 10, wherein the nozzle is configured to dispense a total amount of the dressing of about 0.4 mL to about 0.8 mL per actuation of the nozzle.

12. A method of preparing a shelf-stable salad dressing product according to any of claims 1 to 9, the method comprising:

combining aqueous phase ingredients;
adding an acidic component in an amount effective to the aqueous phase ingredients to provide an aqueous mixture having a pH of less than about 4.0;
treating the aqueous mixture at a temperature effective to pasteurize the aqueous phase mixture;
adding oil to the pasteurized aqueous mixture to provide a water-oil mixture; and
emulsifying the water-oil mixture to provide the emulsified salad dressing product.

13. The method of claim 12, further comprising adding an acidic component after the emulsifying step to provide the emulsified salad dressing product with a final pH of about 3.2 to about 4.0.

14. The method of claim 12 or claim 13, wherein the aqueous phase ingredients comprise water, thickening agent, and salt.

15. The method of any of claims 12 to 14, wherein the acidic component comprises at least one of citric acid, sorbic acid, phosphoric acid, lactic acid, acetic acid, and combinations thereof, preferably wherein the acetic acid is in the form of vinegar.

# FIG. 1

# FIG. 2

Weigh and mix aqueous phase ingredients — 205

Adjust aqueous phase pH with acidic component — 210

Pasteurize aqueous phase — 215

Cool aqueous phase — 220

Add oil and emulsifier to aqueous phase — 225

Emulsify product — 230

Optionally add acidic component — 235

Fill containers — 240

# FIG. 3

| Reference | Recipe B | Recipe C |
|---|---|---|

Europäisches
Patentamt

European
Patent Office

Office européen
des brevets

## EUROPEAN SEARCH REPORT

Application Number

EP 21 15 7180

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/010371 A1 (UNILEVER NV [NL]; UNILEVER PLC [GB] ET AL.) 22 January 2009 (2009-01-22) * page 9 - page 10; example 1; table 1 * | 1-15 | INV. A23D7/005 A23D7/01 A23D7/06 A23L27/60 |
| X | US 4 596 715 A (BALLARD BRUCE F [US] ET AL) 24 June 1986 (1986-06-24) * column 2, lines 27-28 * * column 3, line 35 - line 60 * * example 1 * | 1,3-9, 12-15 | |
| X | US 2002/004074 A1 (BAKAL ABRAHAM I [US] ET AL) 10 January 2002 (2002-01-10) * paragraph [0018] - paragraph [0020]; table 1 * | 1-9, 12-15 | |
| X | CN 108 576 772 A (GUANGZHOU HAODAO FOOD CO LTD) 28 September 2018 (2018-09-28) * the whole document * * claim 1 * | 1-9, 12-15 | |
| X | US 2006/024412 A1 (CHA ALICE S [US] ET AL) 2 February 2006 (2006-02-02) * example 3 * | 1-9, 12-15 | TECHNICAL FIELDS SEARCHED (IPC) A23D A23L |

The present search report has been drawn up for all claims

| Place of search | Date of completion of the search | Examiner |
|---|---|---|
| The Hague | 6 July 2021 | Rooney, Kevin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 15 7180

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2021

| Patent document cited in search report | | Publication date | Patent family member(s) | | Publication date |
|---|---|---|---|---|---|
| WO 2009010371 | A1 | 22-01-2009 | AR | 067579 A1 | 14-10-2009 |
| | | | AT | 520315 T | 15-09-2011 |
| | | | BR | PI0812735 A2 | 24-09-2019 |
| | | | CA | 2693937 A1 | 22-01-2009 |
| | | | EP | 2166880 A1 | 31-03-2010 |
| | | | RU | 2010105698 A | 27-08-2011 |
| | | | US | 2009022874 A1 | 22-01-2009 |
| | | | WO | 2009010371 A1 | 22-01-2009 |
| | | | ZA | 201000040 B | 30-03-2011 |
| US 4596715 | A | 24-06-1986 | NONE | | |
| US 2002004074 | A1 | 10-01-2002 | NONE | | |
| CN 108576772 | A | 28-09-2018 | NONE | | |
| US 2006024412 | A1 | 02-02-2006 | AR | 055611 A1 | 29-08-2007 |
| | | | AU | 2006203558 A1 | 15-03-2007 |
| | | | BR | PI0603395 A | 27-04-2007 |
| | | | CA | 2555672 A1 | 23-02-2007 |
| | | | CN | 1923034 A | 07-03-2007 |
| | | | EG | 24532 A | 30-08-2009 |
| | | | EP | 1757189 A2 | 28-02-2007 |
| | | | EP | 2263472 A2 | 22-12-2010 |
| | | | JP | 2007054066 A | 08-03-2007 |
| | | | NZ | 549315 A | 30-10-2009 |
| | | | US | 2006024412 A1 | 02-02-2006 |
| | | | ZA | 200606832 B | 26-03-2008 |

EPO FORM P0459

For more details about this annex : see Official Journal of the European Patent Office, No. 12/82